Europäisches Patentamt

European Patent Office

Office européen des brevets

(19)

(11) Numéro de publication: **0 012 882**
**A1**

## (12) DEMANDE DE BREVET EUROPEEN

(21) Numéro de dépôt: **79104876.2**

(22) Date de dépôt: **04.12.79**

(51) Int. Cl.³: **H 04 B 9/00**
**G 02 B 5/14**

(30) Priorité: **22.12.78 US 972403**

(43) Date de publication de la demande:
**09.07.80 Bulletin 80/14**

(84) Etats Contractants Désignés:
**AT DE FR GB**

(71) Demandeur: **International Business Machines Corporation**

**Armonk, N.Y. 10504(US)**

(72) Inventeur: **Magura, Paul**
**22134 Serenata Cir.**
**East Boca Raton Florida 33432(US)**

(72) Inventeur: **Merckel, Gerald Ulrich**
**9 NW 25th Court**
**Delray Beach, Florida 33444(US)**

(74) Mandataire: **Bonin, Jean-Jacques**
**COMPAGNIE IBM FRANCE Département de Propriété Industrielle**
**F-06610 La Gaude(FR)**

(54) **Dispositif pour interconnecter deux lignes de transmission optique ou davantage.**

(57) Le dispositif est composé d'une sphère (10) dont l'intérieur est transparent à la lumière et dont la surface est recouverte d'un matériau réfléchissant. La lumière transmise par la fibre optique d'entrée (12) subit une ou plusieurs réflexions à l'intérieur de la sphère et atteint les extrémités des fibres optiques de sorties (14), (16), (18) dans lesquelles elle est ensuite guidée. Des cavités (22), (24), (26), (28) pratiquées sur la surface extérieure de la sphère et remplies d'un corps d'indice de réfraction appropriée permettent de maximiser les transferts de lumière entre les fibres et l'intérieur de la sphère et vice versa.

FIG. 1

EP 0 012 882 A1

1

# DISPOSITIF POUR INTERCONNECTER DEUX LIGNES DE TRANSMISSION OPTIQUE OU DAVANTAGE

## Description

### Domaine technique

La présente invention concerne les dispositifs de couplage optique et, plus particulièrement, de tels dispositifs permettant d'interconnecter deux lignes de transmission optique ou davantage.

### Etat de la technique antérieure

Dans les systèmes de communication optique qui utilisent des fibres optiques, il est souvent nécessaire que les données transmises sous la forme d'un signal lumineux dans une fibre optique soient acheminées simultanément vers plusieurs points. A cette fin, on emploie généralement des dispositifs de couplage optique qui permettent de diviser une fibre optique donnée en deux fibres ou davantage. Par exemple, un dispositif de couplage en forme de T ou de Y permet de transmettre le signal lumineux de la fibre optique d'origine dans deux fibres distinctes. Ou bien encore un dispositif de couplage dit en étoile permet de diviser une fibre optique en trois fibres ou davantage.

Une fibre optique se compose généralement d'un noyau entouré d'un revêtement. La lumière se propage dans le noyau et est réfléchie par l'interface entre ce dernier et le revêtement. Dans un type connu de dispositif de couplage, le noyau que comporte le dispositif se divise en deux de manière à former un Y dans chaque branche duquel se propage la moitié environ de la lumière reçue à l'entrée du dispositif de couplage. Les deux branches

2

de cet Y constituent les sorties du dispositif.

Dans un autre type connu de dispositif de couplage, trois branches allongées en forme de tronc de cône sont réunies à leurs extrémités les plus petites pour constituer un Y, les surfaces de ces branches réfléchissant la lumière qui les frappe. Les dimensions des branches et leur conicité présentent un caractère critique et sont déterminées en fonction du diamètre des lignes de transmission optique correspondantes.

Dans un autre type classique de dispositif de couplage à orifices de sortie multiples, chaque orifice est relié aux autres par des fibres optiques disposées à l'intérieur du dispositif. La lumière reçue par chacun de ces orifices est transmise par l'intermédiaire de ces fibres et se retrouve à tous les autres orifices de sortie. Un tel dispositif est généralement compliqué, complexe et coûteux.

Dans un autre type connu de dispositif de couplage optique, plusieurs lignes de transmission optique sont connectées à l'une des extrémités d'une tige de diffusion à l'extrémité opposée de laquelle est disposé un miroir. La lumière est appliquée à ladite tige par l'une des lignes de transmission, puis se propage dans la tige et est ensuite réfléchie par le miroir vers les autres lignes de transmission. L'efficacité de ce dispositif est essentiellement limitée par les caractéristiques d'absorption et de dispersion de la lumière que présente la tige de diffusion et par le pouvoir réfléchissant du miroir.

L'un des objets de la présente invention est donc de fournir un dispositif de couplage optique qui soit à la fois efficace, peu coûteux et d'un emploi facile.

## 3
## Exposé de l'invention

La présente invention concerne un dispositif de couplage optique comportant plusieurs orifices de sortie et permettant d'interconnecter deux lignes de transmission optique ou davantage de manière à former un système de communication optique. Ce dispositif comprend une sphère dont l'intérieur est transparent à la lumière et dont la surface est recouverte d'un matériau réfléchissant de manière à réfléchir la lumière qui la frappe depuis l'intérieur de la sphère. Les lignes de transmission optique sont couplées optiquement par l'intermédiaire de la sphère de manière à communiquer optiquement avec l'intérieur de celle-ci. La lumière transmise par l'intermédiaire de l'une des lignes de transmission optique se propage dans la sphère et est réfléchie par la surface de celle-ci de manière à se propager dans l'une au moins des autres lignes de transmission optique. On obtient ainsi un couplage optique des lignes de transmission.

Dans une réalisation particulière de la présente invention, le dispositif de couplage optique à orifices de sortie multiples comprend une sphère constituée par un corps transparent plein dont la surface est recouverte d'un revêtement réfléchissant qui permet de réfléchir la lumière qui le frappe depuis l'intérieur de la sphère. Ce revêtement comporte un orifice d'entrée dont les dimensions sont telles qu'il puisse recevoir l'extrémité d'une ligne de transmission optique par laquelle la lumière émanant d'une source appropriée est introduite à l'intérieur de la sphère. Cette dernière comprend, à proximité immédiate de l'orifice d'entrée, une cavité remplie d'un fluide présentant un indice de réfraction choisi de manière à permettre l'introduction d'une quantité de lumière

4

maximum dans la sphère.

Un premier orifice de sortie est formé dans le revêtement réfléchissant. Cet orifice est diamétralement opposée à l'orifice d'entrée et ses dimensions sont telles qu'il puisse recevoir l'extrémité d'une première ligne de transmission optique de sortie dans laquelle se propagera la lumière provenant de l'intérieur de la sphère. Une première cavité de sortie est formée dans la sphère au niveau de ce premier orifice de sortie et est remplie d'un fluide présentant un indice de réfraction choisi de manière à ce qu'une quantité maximum de lumière soit reçue par cette première ligne de sortie. Un second et un troisième orifices de sortie sont prévus en deux autres points de la sphère et ont des dimensions telles qu'ils puissent recevoir respectivement l'extrémité d'une seconde et d'une troisième lignes de transmission dans lesquelles se propagera la lumière provenant de l'intérieur de la sphère. Une seconde et une troisième cavités de sortie sont formées dans la sphère au niveau du second et du troisième orifices de sortie, respectivement, et sont remplies d'un fluide présentant un indice de réfraction choisi de telle sorte qu'une quantité maximum de lumière soit reçue par la seconde et par la troisième lignes de sortie.

La sphère est contenue dans un logement qui comporte des passages destinés à recevoir les lignes de transmission optique et dont le diamètre diminue graduellement de manière à faciliter l'insertion desdites lignes. L'extrémité étroite de ces passages applique une légère force radiale auxdites lignes, si bien que ces dernières se trouvent correctement alignées avec les orifices d'entrée et de sortie percés dans le revêtement réfléchissant de la sphère.

5

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève description des Figures

La Figure 1 est une vue en perspective d'un dispositif de couplage optique de forme sphérique incorporant la présente invention.

La Figure 2 est une coupe schématique d'une variante de l'invention et représente une cavité de forme sphérique réalisée à l'intérieur d'un bloc plein.

La Figure 3 est une vue éclatée représentant un dispositif de couplage optique de forme sphérique ainsi que le logement qui lui est associé.

## Description de l'invention

Sur les différentes figures, les éléments identiques ou correspondants sont désignés par les mêmes numéros de référence.

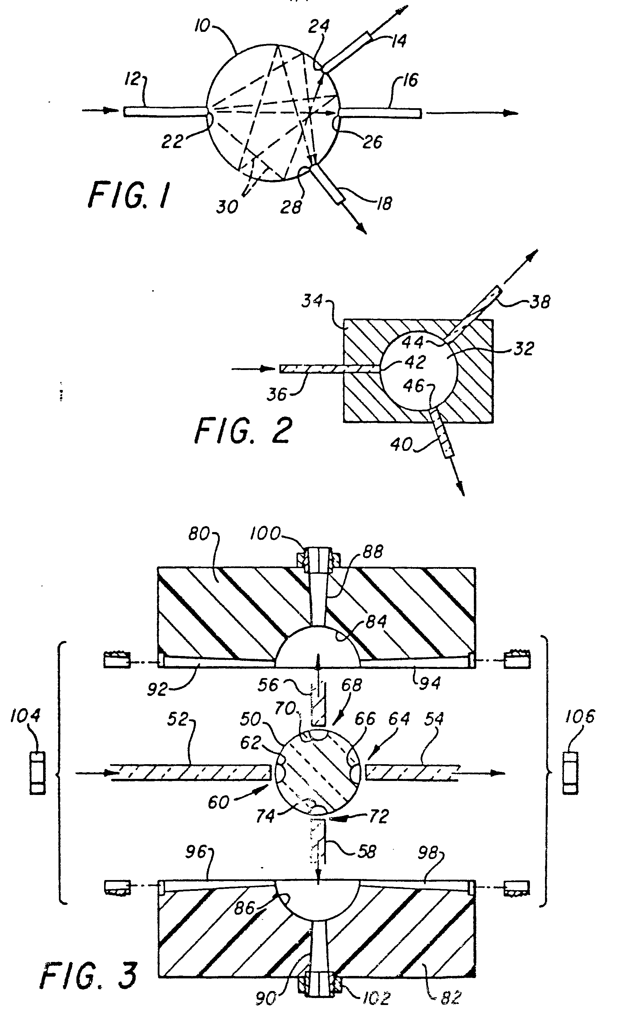

On a représenté sur la Figure 1 une sphère 10 faisant fonction de dispositif de couplage optique et incorporant la présente invention. La sphère 10 est un corps transparent plein dont la surface est recouverte d'un revêtement réfléchissant qui peut être, par exemple, un revêtement métallique déposé sous vide. La sphère 10 elle-même peut être réalisée au moyen d'un verre optique ou d'une matière plastique. Le matériau choisi doit présenter une transparence excellente pour les longueurs d'ondes lumineuses particulières qui sont employées.

6

De même, le revêtement réfléchissant que comporte la sphère 10 doit permettre d'obtenir une réflexion optimum de la lumière qui le frappe depuis l'intérieur de la sphère, et offrir une réflexion maximum aux longueurs d'ondes lumineuses utilisées. Ce revêtement peut être constitué, par exemple, par du fluorure d'aluminium ou de magnésium, ou encore par un matériau réfringent approprié permettant d'obtenir la réflexion requise. Pour obtenir une réflexion adéquate, il est souhaitable que la surface de la sphère ne comporte que de petites irrégularités. Idéalement, ces dernières devraient être inférieures à 100 angströms environ.

La lumière est introduite dans la sphère 10 par une ligne de transmission optique d'entrée 12 et transmise, depuis l'intérieur de la sphère, à des lignes de transmission optique de sortie 14, 16 et 18, soit directement, soit après avoir été réfléchie une ou plusieurs fois par le revêtement que comporte la sphère.

Un orifice optique d'entrée 22 est percé dans le revêtement réfléchissant de la sphère 10 et présente un diamètre tel qu'il puisse recevoir la ligne d'entrée 12. De même, des orifices optiques de sortie 24, 26 et 28 sont percés dans ledit revêtement de telle sorte qu'ils puissent respectivement recevoir les lignes de sortie 14, 16 et 18. Ainsi qu'on le verra ci-après de façon plus détaillée, ces orifices optiques sont réalisés de telle sorte qu'ils assurent un transfert efficace de la lumière entre la ligne 12 et les lignes 14, 16 et 18, par l'intermédiaire de la sphère.

Ces lignes, qui sont orientées de préférence radialement, sont fixées par des moyens mécaniques, de façon appropriée, à proximité des orifices 22, 24, 26 et 28. Par exemple, on peut employer un boîtier ou un châssis pour

monter la sphère 10 de telle sorte que celle-ci aboute les lignes 12, 14, 16 et 18. Bien que ces lignes aient toutes été représentées dans un même plan, elles peuvent bien entendu être montées sur n'importe quel point de la sphère.

Sur la Figure 1, les lignes pointillées 30 représentent le parcours que peuvent éventuellement suivre les rayons lumineux à l'intérieur de la sphère 10. Il s'agit en l'occurrence de simples exemples, un nombre infini de ces parcours existant entre la ligne 12 et les lignes de sortie 14, 16 et 18.

L'orifice d'entrée 22 peut avoir une géométrie telle qu'elle permette la transmission à l'intérieur de la sphère 10 d'une configuration lumineuse prédéterminée. Cette dernière doit être choisie de telle sorte qu'elle permette le transfert d'une quantité de lumière optimum aux lignes de sortie 14, 16 et 18. La configuration lumineuse particulière que l'on choisira sera fonction de l'emplacement des orifices 24, 26 et 28. De même, ces derniers doivent présenter une géométrie susceptible de permettre le transfert d'une quantité maximum de lumière aux lignes 14, 16 et 18. Les orifices 24, 26 et 28 doivent donc tendre à collimater la lumière qui les frappe, de manière à faciliter la propagation de celle-ci dans les lignes 14, 16 et 18.

On a représenté sur la Figure 2 une coupe d'une variante de la présente invention dans laquelle une cavité sphérique 32 est formée dans un bloc plein 34. Une ligne de transmission optique 36 reliée à une source lumineuse est connectée à la cavité 32 de manière à permettre l'introduction dans celle-ci de la lumière, et des lignes de transmission optique 38 et 40 sont d'autre part connectées à la cavité 32 de manière à

8

recevoir la lumière depuis l'intérieur de celle-ci. La surface intérieure de la cavité sphérique 32 est recouverte d'un matériau réfléchissant assurant une réflexion efficace de la lumière contenue à l'intérieur de ladite cavité.

La surface intérieure de la cavité 32 comporte des orifices 42, 44 et 46 permettant à la lumière de pénétrer dans celle-ci et d'en sortir. Ces orifices peuvent être de simples ouvertures formées dans le bloc plein 34 et dans la surface de la cavité 32, ou comporter une ou plusieurs lentilles permettant d'obtenir un transfert optimum de la lumière entre la ligne 36 et les lignes de sortie 38 et 40. Là encore, les lignes 38 et 40 peuvent être soit dans un même plan soit dans des plans différents.

Le dispositif de couplage optique représenté sur la Figure 2 et celui représenté sur la Figure 1 fonctionnent de façon analogue. La lumière est introduite dans la cavité 32 par la ligne 36, puis est transmise aux lignes de sortie 38 et 40, soit directement, soit après avoir été réfléchie une ou plusieurs fois par le revêtement de la surface intérieure de la sphère.

La Figure 3 est une vue d'une autre variante de la présente invention. Une sphère tranparente pleine 50 dont la surface extérieure comporte un revêtement réfléchissant est réalisée de la même façon que la sphère 10 de la Figure 1. Une ligne de transmission optique d'entrée 52 reliée à une source lumineuse introduit dans la sphère 50 de la lumière qui sort de celle-ci par l'intermédiaire d'une ligne primaire de transmission optique 54 et de lignes secondaires de transmission optique 56 et 58. Dans un but de clarté, les lignes 52, 54, 56 et 58 sont légèrement séparées, sur la figure, de la sphère 50, à laquelle elles sont fixées en réalité.

Un orifice optique 60 destiné à recevoir la ligne d'entrée 52 est percé dans le revêtement réfléchissant de la sphère 50. Une cavité 62 est formée dans la sphère 50 à proximité immédiate de l'orifice 60 et est destinée à être remplie d'une huile ou de tout autre fluide transparent présentant un indice de réfraction prédéterminé. La géométrie de l'extrémité de la ligne 52 et celle de la cavité 62 forment, en conjonction avec ledit fluide, une lentille qui permet de diriger la lumière selon une configuration prédéterminée à l'intérieur de la sphère 50. La configuration lumineuse désirée peut donc être obtenue à l'intérieur de la sphère 50 en modifiant de façon appropriée la géométrie de la cavité 62 et celle de l'extrémité de la ligne 52, et en utilisant un fluide présentant un indice de réfraction approprié. Ce fluide a pour objet de rendre aussi efficace qu possible le transfert de la lumière; mais sa suppression peut se traduire par une diminution de l'efficacité de ce transfert.

De même, des orifices optiques 64, 68 et 72 sont percés dans le revêtement de la sphère 50 afin de recevoir respectivement les lignes de sortie 54, 56 et 58. Des cavités 66, 70 et 74 sont respectivement formées dans la sphère 50 à proximité immédiate des orifices 64, 68 et 72 afin d'être remplies d'un fluide présentant un indice de réfraction approprié. Comme précédemment, la géométrie des extrémités des lignes 54, 56 et 58 et celle des cavités 66, 70 et 74 forment, en conjonction avec le fluide qui les remplit, des lentilles. Ces dernières doivent être conçues de manière à ce qu'une quantité maximum de lumière soit reçue par les lignes 54, 56 et 58.

10

La ligne primaire de sortie 54 est diamétralement opposée à la ligne d'entrée 52 sur la sphère 50. Dans la réalisation préférée, la lentille partiellement constituée par la cavité 62 est choisie de manière à créer une configuration lumineuse permettant d'introduire davantage de lumière dans la ligne primaire 54 que dans les lignes secondaires de sortie 56 et 58.

Les extrémités des lignes 56 et 58 sont diamétralement opposées sur la sphère 50 et sont équidistantes de l'orifice 60 par lequel la lumière est introduite dans la sphère. La lentille partiellement formée par la cavité d'entrée 62 est choisie de telle sorte qu'une même quantité de lumière soit introduite dans les lignes 56 et 58. Un choix judicieux de la géométrie de la cavité 62 et des emplacements des lignes de sortie 54, 56 et 58 permettra d'obtenir une distribution désirée de la lumière entre les différentes lignes de sortie.

La sphère 50 et les lignes de transmission 52, 54, 56 et 58 sont logées à l'intérieur de deux blocs, 80 et 82, dans lesquels des cavités hémisphériques 84 et 86 sont respectivement formées. Lorsque les blocs 80 et 82 sont réunis l'un à l'autre, les cavités hémisphériques 84 et 86 constituent une cavité sphérique dans laquelle est logée la sphère 50. Des passages ou des évidements 88 et 90 destinés respectivement à recevoir les lignes de transmission 56 et 58 sont respectivement formés dans les blocs 80 et 82. Des cavités hémicylindriques 92 et 94 sont formées dans le bloc 80, et des cavités hémicylindriques correspondantes 96 et 98 sont d'autre part formées dans le bloc 82. Lorsque les deux blocs sont réunis, les cavités 92 et 96 constituent un passage destiné à recevoir la ligne d'entrée 52, et les cavités 94 et 98 forment un passage destiné à recevoir

11

la ligne de sortie 54. Les blocs 80 et 82 peuvent être fixés l'un à l'autre par des moyens classiques, par exemple au moyen de vis, de boulons ou d'adhésifs.

Chacun de ces passages présente une légère conicité que l'on peut surtout observer dans le cas des passages 88 et 90. Cette légère conicité crée une compression radiale qui facilite l'insertion des lignes de transmission 52, 54, 56 et 58, permet de les maintenir dans les passages et assure un alignement correct entre ces lignes et les orifices 60, 64, 68 et 72.

Les extrémités des passages 84 et 86 sont respectivement pourvues de connecteurs 100 et 102, et les extrémités des passages formés par les cavités 84, 86 et 88, 90 sont respectivement pourvues de connecteurs 104 et 106. Les connecteurs 100, 102, 104 et 106 maintiennent les lignes de transmission optique de façon classique. Chacun de ces connecteurs peut éventuellement être réalisé sous la forme d'une douille de serrage du type communément employé dans l'industrie. Tous les connecteurs, tels que les connecteurs 100, 102, 104 et 106, sont conformes aux normes applicables en ce qui concerne leur compatibilité avec les lignes de transmission optique.

Il est sous-entendu que les dispositifs de couplage optique représentés sur les Figures 1, 2 et 3 et décrits ci-dessus sont de simples exemples et ne présentent aucun caractère limitatif. D'autres structures, telles que des sphères en verre ou en matière plastique pourvues d'un revêtement réfléchissant, pourraient également être employées aux fins de la mise en oeuvre de la présente invention.

De même, bien que la forme sphérique soit présentement

12

considérée comme préférable grâce à sa facilité de construction, de conception et aux résultats qu'elle procure, toute autre forme appropriée pourrait être utilisée. Il est toutefois hautement préférable que le volume de transmission optique soit un volume de révolution dont l'axe coïncide avec celui de la ligne d'entrée.

En ce qui concerne les dimensions relatives du volume de transmission optique et des fibres optiques, il est préférable que la plus grande dimension de ce volume (c'est-à-dire le diamètre lorsqu'il s'agit d'une sphère) ne dépasse pas 4 à 6 fois le diamètre des fibres optiques utilisées.

Enfin, il est clair que l'emplacement des lignes de sortie est choisi en fonction des besoins, notamment en fonction de la répartition de lumière souhaitée pour chacune de ces lignes.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

REVENDICATIONS

1.- Dispositif pour interconnecter deux lignes de transmission optiques ou davantage, du genre comprenant

une ligne de transmission optique d'entrée,

au moins une ligne de transmission optique de sortie, et

des moyens de couplage pour transférer la lumière issue de ladite ligne d'entrée dans ladite ligne de sortie,

caractérisé en ce que lesdits moyens de couplage comportent

une surface fermée définissant un volume dont la paroi intérieure est réfléchissante pour la lumière transmise par ladite ligne d'entrée, l'intérieur dudit volume étant constitué par un matériau transparent à ce même rayonnement lumineux,

une ouverture d'entrée pratiquée dans ladite surface pour monter l'extrémité de ladite ligne d'entrée de façon étanche à la lumière,

au moins un ouverture de sortie dans ladite surface pour monter l'extrémité de ladite ligne de sortie de façon étanche à la lumière, de façon qu'une partie au moins de la lumière issue de ladite ligne d'entrée soit transmise à ladite ligne de sortie après une ou plusieurs réflexions sur la paroi réfléchissante de ladite surface fermée.

2.- Dispositif selon la revendication 1, caractérisé en ce qu'il comporte des premiers moyens de collimation disposés au voisinage immédiat de ladite ouverture d'entrée pour donner une forme appropriée au faisceau de lumière issu de ladite ligne d'entrée et entrant à l'intérieur de ladite surface.

3.- Dispositif selon la revendication 1 ou 2, caractérisé en ce qu'il comporte des seconds moyens de collimation disposés au voisinage de ladite ouverture de sortie, pour maximiser la quantité de lumière transmise vers ladite seconde ligne.

4.- Dispositif selon la revendication 3, caractérisé en ce que lesdits premiers et seconds moyens de collimation sont constitués chacun par un évidement pratiqué dans ledit matériau transparent et rempli d'un fluide présentant un indice de réfraction approprié.

5.- Dispositif selon l'un quelconque des revendications précédentes, caractérisé en ce que ledit volume est constitué d'un corps solide transparent et ladite paroi intérieure réfléchissante de ladite surface est constituée par un revêtement approprié appliqué sur la surface extérieure dudit corps solide.

6.- Dispositif selon l'une quelconque des revendications précédentes, caractérisé en ce que ladite surface fermée est une sphère.

7.- Dispositif selon la revendication 6, caractérisé en ce que ladite surface fermée comporte plusieurs ouvertures de sortie, l'une desdites ouvertures de sorties étant diamétralement opposée à ladite

15

ouverture d'entrée.

8.- Dispositif selon la revendication 6 ou 7, caractérisé en ce que ladite ligne d'entrée et la ou les lignes de sortie sont orientées radialement par rapport à ladite sphère, au moins au voisinage de celle-ci.

FIG. 1

FIG. 2

FIG. 3

**Europäisches Patentamt**

**EUROPÄISCHER RECHERCHENBERICHT**

**0012882**

Nummer der Anmeldung

EP 79 10 4876

| Kategorie | EINSCHLÄGIGE DOKUMENTE | | KLASSIFIKATION DER ANMELDUNG (Int.Cl.³) |
|---|---|---|---|
| | Kennzeichnung des Dokuments mit Angabe, soweit erforderlich, der maßgeblichen Teile | betrifft Anspruch | |
| | US - A - 3 455 625 (BRUMLEY)<br>* Spalte 3, Zeilen 13,14; Spalte 4, Zeilen 46-62 *<br><br>-- | 1,5,6 8 | H 04 B 9/00<br>G 02 B 5/14 |
| | US - A - 3 932 023 (HUMER)<br>* Spalte 1, Zeile 66 bis Spalte 2, Zeile 2; Spalte 2, Zeilen 34-36 *<br><br>-- | 1,2,6 8 | |
| | US - A - 4 119 362 (HOLZMAN)<br>* Spalte 1, Zeilen 46-66; Spalte 6, Zeilen 22-24 *<br><br>-- | 1-5 | **RECHERCHIERTE SACHGEBIETE (Int.Cl.³)**<br><br>H 04 B 9/00<br>G 02 B 5/.. |
| | DE - A - 2 546 861 (LICENTIA)<br>* Ansprüche 1,7 *<br><br>-- | 1,2,4, 5 | |
| | DE - A - 2 600 893 (SIEMENS)<br>* Figur 1 *<br><br>-- | 1,2,7, 8 | |
| A | FR - A - 2 333 258 (THOMSON CSF)<br>* Seite 4, Zeilen 3-10 *<br><br>---- | 1-6 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 02-04-1980 | GEISLER |

EPA form 1503.1 03.78